# EUROPEAN PATENT APPLICATION

(11) **EP 1 346 816 A2**
(43) Date of publication of application: **24.09.2003**
(21) Application number: 03447044.3
(22) Date of filing: 04.03.2003
(51) Int. Cl.: B29C 65/00, A43B 9/16

(54) **Compound composite materials and structures formed therefrom**

(30) Priority: 04.03.2002 BE 200200146
(71) Applicant: IPA N.V.-Composites, 9160 Lokeren (BE)
(72) Inventor: Van Raemdonck, Joris, B-9150 Lokeren (BE)
(74) Representative: Brants, Johan Philippe Emile

(57) **Abstract**

The invention relates to a method of joining a thermoplastic material (1) with a second non-thermoplastic material (2), and the compound composite material so-formed. The invention further relates to a structure formed with the compound composite material, wherein one of the composite materials may be reversibly moulded.

## Description

### FIELD OF THE INVENTION

The invention relates to a method of joining a thermoplastic material with a second non-thermoplastic material, and the compound composite material so-formed. The invention further relates to a structure formed with the compound composite material, wherein one of the composite materials may be reversibly moulded.

### BACKGROUND TO THE INVENTION

Composite materials are generally well-known and widespread, have applications in forming structures such as, for example, vehicle frames, tennis, badminton squash rackets, bicycle frames, motorcycle helmets, furniture.

A composite material may comprise several elements. One example of a composite material comprises a matrix and fibres.

The matrix comprises a homogenous resin of polymer material. The role of the matrix is complex; it must bind properly to the fibres, maintain the orientation of the fibres, transmit tension in the structure to the fibres, maintain the rigidity of the composite material across its length, provide the surface colours, and protect the composite material from the environmental stresses such as moisture, chemical exposure and physical abrasion.

Matrices may be constructed from resins such as polyesters, polyurethanes, vinylester, epoxys, silicons, polyiliden. Other examples include metals, ceramics and glass.

The role of the fibres is to reinforce the composite materials. They are generally stronger and more stiffened materials, which when combined with the matrix improve the mechanical properties of the composite material. Fibres may be woven into a complex or simple textile design; the direction of the fibres determine the direction of reinforcement. The fibres can be divided into three main types, namely mineral fibres including glass, carbon and silicon fibres; organic fibres, including aramid, vegetable and synthetic fibres and metallic fibres, including aluminium, silicon carbide and titanium fibres.

The fibres in most common use are glass, carbon and aramid fibres. If more than one different type of fibres are used for reinforcement in a composite material (e.g. glass and carbon), then it is known as hybrid reinforcement.

Composite made using carbon fibres have excellent mechanical properties such as tensile and compression strength, good thermal resistance with no or little expansion, low density and good chemical stability. However, carbon fibres are very expensive, fragile, sensitive to shocks and have weak wear and tear resistance.

In respect of the matrix, there are two important classes: the thermoset matrix and the thermoplastic matrix.

### Thermoplastics

If the temperature of thermoplastic material is raised, the material becomes plastic *i.e.* it becomes pliable. if the material is allowed to cool down it will lose its pliability and harden. Thus, a thermoplastic resin may be repeatedly melted and set by raising and lowing the temperature. One property of thermoplastic resins is they comprise no crosslinking compounds.

Several common thermoplastics with different properties and uses are polyethylene, polyamides, Teflon and PVC. Polyethylene is formed by the polymerisation of ethylene. Polyethyleen has a low specific weight and is often used pure in piping and packing material. Polyamides are better known as nylon. In addition to use as synthetic fibre, polyamides are also often used for mechanical purposes because of its great mechanical resistance and self-lubricating properties. Teflon is the material with the lowest friction coefficient. Further it has very good chemical resistance and supports high and low temperatures very well (up to 350ºC). PVC (polyvinyl chloride) is, without doubt, the most common plastic, thanks to its extremely simple design. As such, its uses are diverse.

By the addition of a softener, the physical properties of thermoplastics can be changed. This softener acts as an internal greasing agent on a microscopic level. It eases the sliding of the linear molecular chains in relation to one another. Examples of softeners include, but are not limited to, CAPA® polycaprolactones (Solvay), which are known in this field of technology. The technical aspects and the concentrations can be found on the Solvay website.

### Thermosets

Thermosets take their name from the fact that they harden under the influence of heat, the said hardening being an irreversible process. One example of a thermoset material is bakelite, which is formed from the polycondensation of phenol and formol, and which is used in the manufacture of switches. Other examples include epoxy resin, which is the polyaddition product of epoxide and an amino; and polyester resin which is the polycondensation product of an acid and an alcohol.

The resins of thermosets comprise polymer chains and one or more cross-linking compounds; they may be set only once due to the fact that the cross-linking compounds forms a three dimensional network with the polymer chains. This is in contrast to thermoplastic resins which contain no crosslinking compounds, and may be remoulded and set more than once. Thermoset composite materials are mostly delivered in the form of plates, textiles or orientated fibre systems and not in a separate, temporary support, which would be removed when the composite material is added.

### Manufacture of composite materials

Various techniques can be used to produce the composite materials. Practically all these techniques make use of layers of a fibre and a mould. This mould can be made from any material known in the art suitable therefor, including, but not limited to wood, aluminium and polyester. Depending on the inside and/or outside dimensions of the end product, the carbon-fibre layers are introduced in or on the mould. The number of carbon-fibre layers used determines not only the density of the product, but also its strength. Of the different production techniques known in the art, producing composite materials generally comprises five common steps:
a) Introducing one or more fibres into a mould. The fibres can be one of the fibres mentioned in the previous paragraphs.
b) Impregnating or saturating the fibres by applying resin to the fibres.
c) Removing the air from the saturated fibre layer.
d) Repeating the previous steps such that the product comprises several layers.
e) Hardening the resin by raising the temperature, and/or by raising the pressure, and/or by vacuum.
f) Removing the composite material from the mould.

Some of the most important production processes include the hand lay-up method, the winding/wrapping, the spray-up method, the cold and warm press, vacuum bagging, the autoclave method, pultrusion, Resin Transfer Moulding, SCRIMP, RIFT, and VARTM, prepreg. moulding, resin film infusion, centrifugation, resin injection and pouring the polybeton.

### Joints

There are several ways of permanently joining two composite materials such as using a seam or using an adhesive; the method depends on the mechanical and thermal properties of the composites. Satisfactory methods currently do not exist for permanently joining two materials each having different mechanical and chemical properties such as a thermoset matrix and a thermoplastic matrix composite material. Neither do methods currently exist for permanently joining a thermoplastic matrix composite material with a stiffened material such as leather. Furthermore, no method presently exists for permanently joining a thermoplastic matrix composite materials with a thermoset matrix composite material or a stiffened material, wherein the joint so formed is suitable for use an applications wherein the thermoplastic may be remoulded after joining, without disruption the joint.

### Footware

The size of footware is presently limited to those of standard size produced by manufacturers. Unless shoes are tailor-made - which is an expensive process - it may be difficult to obtain an item of footware from a manufacturer that fits well. Good fitting footware is required in several instances, for example, in sports shoes, in skating shoes, in utility shoes, and generally in high-performance situations. Furthermore, it is common for individuals to have different sized feet, yet shoes supplied by manufacturers as identical pairs, and do not account for small differences in shoe size. There is a need for method of providing manufactured shoes which may be subsequently moulded to match an individual's foot.

### Radiotherapy masks

Radiotherapy masks are devices that are precisely moulded to suit the shape of a part of an individual requiring radiotherapy, for example, an arm, and which enables the part to be held in a precise position during treatment, to shield a portion of the part from radiation treatment, and to reproduce the said positioning after an interval without treatment, without the need to perform extensive alignment operations. The mask is reversibly fixed to the radiotherapy and/or scanning apparatus during treatment. A present and common of method of making a radiotherapy mask, known to be uncomfortable to the individual, involves the application of mobile damp dental plaster to the part, followed by the application of plaster of Paris bandages. For head and neck cancers, wherein a mask is made to suit the contours of the face and neck, the procedure is distressing due to the entry of fluid into the nose, mouth, ears and eyes, the weight of the plaster and the time taken for the plaster to set. A method and material suitable for making individual radiotherapy masks, and which overcomes problems of the prior art, is required.

### AIMS OF THE INVENTION

The invention aims to provide a compound composite material comprising one or more thermoset composite materials, one or more thermoplastic composite material and one or more permanent joints between said thermoset and thermoplastic materials. It is a further aim of the invention to provide a compound composite material comprising one or more stiffened materials, one or more thermoplastic composite material and one or more permanent joints between said stiffened and thermoplastic materials. It is a further aim of the invention to provide a permanent joint suitable for use in compound composite materials, wherein the thermoplastic composite material may be remoulded at least once without disruption to the joint. It is further an aim of the invention for providing a method for making such a joint. It is a further aim of the invention to provide bespoke footwear and radiotherapy masks using said compound composite material.

### DETAILED DESCRIPTION OF THE INVENTION

The present invention relates to a method of obtaining a permanent joint between one or more thermoset composite materials and one or more thermoplastic composite materials. It further relates to a method of obtaining a permanent joint between one or more stiffened materials and one or more thermoplastic composite materials. The inventors have surprising found that the compound composite material so-formed using method has the property that the thermoplastic composite material may be remoulded without degrading the joint. The inventors have further found that the compound composite material formed according to the method may be used for the cost-effective and convenient manufacture of bespoke articles, such as bespoke footware and radiotherapy treatment masks.

By compound composite material as used herein means an entity comprising:
- one or more thermoplastic matrix composite materials,
- one or more thermoset matrix composite materials or one or more stiffened materials, and
- one or more joints between said thermoset- and thermoplastic-matrix composite materials.

One embodiment of the invention is a method obtaining a permanent joint between a thermoset matrix composite material and a thermoplastic matrix composite material comprising the following steps:
a) providing one or more holes in the thermoset matrix composite material along the position of the intended joint,
b) positioning a thermoplastic matrix composite material on one surface of the thermoset matrix composite material and a thermoplastic matrix composite material on the other surface of the thermoset matrix composite material, both along the position of the intended joint, and,
c) applying one or more forces such that part of said thermoplastic matrix composite materials pass through said holes.
d) obtaining a permanent joint.

A thermoset matrix composite material is a composite material comprising a thermoset matrix. Suitable thermoset matrices according to the invention include any thermoset matrix suitable for the intended purpose.

A thermoplastic matrix composite material is a composite material comprising a thermoplastic matrix. Suitable thermoplastic matrices according to the invention include any thermoplastic matrix suitable for the intended purpose.

Holes can be introduced into the thermoset matrix composite material by any method of the art, including, but not limited to sawing, drilling, milling, punching or piercing. They may further be introduced by use of a mould that provides holes during the manufacture of the thermoset matrix composite material. The diameter of the holes can be of any size, but they should be of sufficient size to allow the passage of the thermoplastic resin there-through. The passage of thermoplastic resin through the holes in the thermoset matrix composite during the joining process allows the permanent joining of the two composites. The properties of the joint may be varied according to the diameter of the hole and the number of holes. According to an aspect of the invention, the holes are introduced at a regular pattern of intervals. This is to achieve a uniform compound structure.

Suitable techniques for performing step c) of the invention include, any method of the art currently used to manufacture composites. These include, but are not limited to:
- Cold and warm press wherein hardening takes place by the application of pressure across the joint. In one example, a stamp may be applied to one surface of the joint and pressure applied thereto. By using pressure, the resulting joint has a high glass percentage, a high strength and a smooth surface. Depending on the temperature at which the pressure is applied, the technique is known as warm or cold press.
- Vacuum: Using the vacuum process at step c) the thermoplastic resin passes through the holes in the theromset matrix composite material form by use of a vacuum. By holding part of, or the entire intended joint under vacuum, the joint may be formed.
- Autoclave: When using the autoclave process, pressure is used as well as vacuum and temperature.
Possible introduction of pressure and vacuum can occur through 1kg by which the complex undergoes a temperature increase of more than 60 - 120ºC during a period of 5 to 15 minutes. A higher temperature and longer time would possibly be necessary for the autoclave method.

According to one aspect of the invention, the method uses uncured thermoplastic matrix composite material, and the application of force in step c), when applied to the thermoplastic matrix composite material also cures said matrix. According to another aspect of the invention, the method uses uncured thermoset matrix composite material, and the application of force in step c), when applied to the thermoset matrix composite material also cures said matrix. According to another aspect of the invention, the method uses uncured thermoset and thermoplastic matrix composite material, and the application of force in step c), when applied to the thermoset and thermoplastic matrix composite materials also cures said matrices. The force used in step c) is by application of any method currently known in the art for curing composite materials.

The method provides a permanent, solid and reliable joint between the thermoset matrix composite material and the thermoplastic matrix composite material; the advantages of both materials are combined in the compound structure so formed.

The invention also concerns a method for connecting a thermoset matrix composite material with a thermoplastic matrix composite material wherein both composite material matrices are sewn or stitched together by means of a flexible thread, which passes though both materials. In general such a sewing and/or stitching process can be carried out with any known flexible thread. Examples of threads include, but are not limited to, Kevlar, nylon, cotton, polyester.

In one embodiment of the present invention, the thermoplastic-matrix composite of the compound composite material can be remolded after manufacture of the joined material; the thermoset matrix composite material cannot be remoulded after manufacture.

The thermoplastic matrix composite material may be remoulded by raising the temperature above its melting temperature. According to an aspect of the invention, this might be achieve by raising the temperature in air, for example in an oven, using a hot air blower or using radiant heat. Alternatively, it might be achieved by immersion into warm water or other suitable liquid. The melting temperature - the temperature at which the themoplastic-matrix composite may be remoulded - may be determined by the type of thermoplastic matrix and the additives therein. According to one aspect of the present invention, the melting temperature of the themoplastic-matrix composite may be any temperature. According to another aspect of the present invention, the melting temperature of the themoplastic-matrix composite may be any temperature between 30 and 100ºC, 35 and 100ºC, 40 and 100ºC, 45 and 100ºC, 50 and 100ºC, 55 and 100ºC, 60 and 100ºC, 65 and 100ºC, 70 and 100ºC, 75 and 100ºC, 80 and 100ºC, 85 and 100ºC, 90 and 100ºC, 95 and 100ºC, 30 and 95ºC, 35 and 95ºC, 40 and 95ºC, 45 and 95ºC, 50 and 95ºC, 55 and 95ºC, 60 and 95ºC, 65 and 95ºC, 70 and 95ºC, 75 and 95ºC, 80 and 95ºC, 85 and 95ºC, 90 and 95ºC, 30 and 85ºC, 35 and 85ºC, 40 and 85ºC, 45 and 85ºC, 50 and 85ºC, 55 and 85ºC, 60 and 85ºC, 65 and 85ºC, 70 and 85ºC, 75 and 85ºC, 80 and 85ºC, 30 and 80ºC, 35 and 80ºC, 40 and 80ºC, 45 and 80ºC, 50 and 80ºC, 55 and 80ºC, 60 and 80ºC, 65 and 80ºC, 70 and 80ºC, 75 and 80ºC, 30 and 75ºC, 35 and 75ºC, 40 and 75ºC, 45 and 75ºC, 50 and 75ºC, 55 and 75º0, 60 and 75ºC, 65 and 75ºC, 70 and 75ºC, 30 and 70ºC, 35 and 70ºC, 40 and 70ºC, 45 and 70ºC, 50 and 70ºC, 55 and 70ºC, 60 and 70º0, 65 and 70ºC, 30 and 65ºC, 35 and 65ºC, 40 and 65ºC, 45 and 65ºC, 50 and 65ºC, 55 and 65ºC, 60 and 65ºC, 30 and 60ºC, 35 and 60ºC, 40 and 60ºC, 45 and 60ºC, 50 and 60ºC, 55 and 60ºC, 30 and 55ºC, 35 and 55ºC, 40 and 55ºC, 45 and 55ºC, 50 and 55ºC, 30 and 50ºC, 35 and 50ºC, 40 and 50ºC, 45 and 50ºC, 30 and 40ºC, 35 and 40ºC, or 30 and 35ºC.

Once the desired shape has been formed, the temperature may be lowered such that the shape so-formed remains stable. The temperature at which this occurs is a temperature below the melting temperature.

According an embodiment of the invention, softener may be added during manufacture to the thermoplastic matrix to change its physical properties. The softener acts as an internal greasing agent on a microscopic level. It eases the sliding of the linear molecular chains in relation to one another. The softener may be any softener known in the art. Examples of softeners according to the invention include, but are not limited to, CAPA® polycaprolactones (Solvay), kenflex.

### Footware

According to one embodiment of the present invention, the compound composite material is used for the manufacture of footware, wherein the sole is manufactured from a thermoset matrix composite material and the upper, or part thereof is manufactured from a thermoplastic matrix composite material. According to one aspect of the invention, the sole is manufactured from a thermoset matrix composite material, the heel is made from thermoplastic material and the remainder of the foot-ware made from materials known in the art of shoe making, such as, for example, leather, PVC, canvas. The heel and the remainder of the footware are joined using methods known in the art. By remoulding the thermoplastic matrix composite material part of the footware, the shape of the heel of the footware can also be adapted to suit the shape of an individual's foot. According to another aspect of the invention, the toe piece is made from thermoplastic material, the sole is made from a thermoset matrix composite material and the remainder of the footware made from materials known in the art of shoe making. According to another aspect of the invention, the instep is made from thermoplastic material, the sole is made from a thermoset matrix composite material and the remainder of the footware made from materials known in the art of shoe making. According to another aspect of the invention, more than one part of the upper of the footware may be made from thermoplastic matrix composite material, the sole is made from a thermoset matrix composite material and the remainder of the footware made from materials known in the art of shoe making, provided that one or more joints exists between the thermoplastic matrix composite material and the sole.

One advantage of such an item of footware is that it can be adjusted to suit an individual's foot by reversibly moulding the thermoplastic matrix composite material. This can be achieved, for example, by increasing the temperature or the pressure on the thermoplastic matrix composite material, so making it pliable. The footware is then brought into contact with the foot, where the foot acts as a mould for the thermoplastic matrix composite material. By cooling the temperature or bringing the pressure back to normal, the adjustable material will harden again and maintain a stable structure. Thus, a unique example of a pair of shoes, suitable for an individual's feet, is obtained.

Another aspect of the invention concerns footware as described above, but wherein the soles are made from one or more stiff materials suitable for constructing a sole, such as, for example, leather and solid composite fibres. The thermoplastic matrix composite material and the stiff material are joined to each other, as already explained above; the joint can be made by sandwiching the stiff material provided with holes, between the thermoplastic matrix composite materials and applying heat and/or pressure and/or vacuum to the joint as already described herein. Alternatively, they may be joined by sewing or stitching both materials to each other. As already described above, the remainder of the shoe may be constructed from materials known in the art of shoe making.

According to an aspect of the invention, where the upper is partly constructed from thermoplastic matrix composite material, in areas such as, for example, the toe, the heel and/or the instep and the sole is a stiff material or a thermoset matrix composite material, the remainder of the footware may be constructed after the thermoplastic matrix composite material has been moulded to the shape of an individual's foot. For example, an initial moulding to an individual's foot may provide a bespoke frame onto which the remaining elements of the footware may be attached. The attachment may be performed, for example, by a specialist, or by a non-specilaist depending on the complexity. Alternatively, the footware may be pre-constructed in its entirely, without the need for additional post-manufactural attachments, and the complete item of footware may be moulded to the shape of an individual's foot.

According to an aspect of the invention, an item of footware, in the partial or complete form, can be moulded to suit the shape of an individual's foot after manufacture, by the shoe distributor himself.

According to another aspect of the invention, an item of footware, in the partial or complete form, can be moulded to suit the shape of an individual's foot after manufacture, by the individual himself, in another aspect of the invention, the footware, in the partial or complete form, may be available after manufacture in a range of standard sizes such that moulding provides a more comfortable, and/or tigher fit than the standard size.

In one embodiment of the invention, the footware according to the invention, the thermoset matrix composite material is a carbon fibre composite, and the thermoplastic matrix composite material is also a carbon fibre composite. In one aspect of the invention, said composite materials are joined by stitching using a flexible thread. According to another aspect of the invention, the form of thread is a Kevlar thread of a sufficient thickness to bind the two composite materials to each other.

According to an embodiment of the invention, the thermoplastic matrix composite material may be bonded to another material which provides a finish. Examples of materials include leather, PVC, suede. The finish might be for the purpose of wear and tear, waterproofing, to match with other elements of the shoe.

There are many examples of footware according to the invention. Some footware requires a fit to suit an individual's bare foot. Alternatively, some footware requires a fit suitable for an individual's foot, wherein the foot is already dressed with additional items(s), for example a sock, a heat resistant sleeve, a medical support and/or an under shoe. Alternatively, some footware requires a fit suitable for an individual's foot, wherein the footware comprises an internal lining which contacts the individual's bare or dressed foot, such as, for example, a tactile lining, a thermal lining, a shock absorbing lining, and/or a supporting lining. Examples of footware according to the invention include, but are not limited to medical shoes such as those to correct deformations, those used to assist with the repair of broken bones or torn ligaments; inner shoes, walking shoes and boots; sports shoes suitable for playing any sport including, squash, football, running, jogging, basketball, badminton; roller skates, roller blades; ice skates; ski shoes; langlauf shoes; fashion shoes and boots; casual shoes and boots; formal shoes and boots; utility shoes and boots including safety foot-ware, military foot-ware, diving foot-ware, climbing foot-ware.

### Radiotherapy masks

According to one embodiment of the present invention, the compound composite material is used for the manufacture of radiotherapy masks, wherein a frame is manufactured from a thermoset matrix composite material, and held within the frame is an area of thermoplastic matrix composite material. According to as aspect of the invention, the frame is of a size and shape suitable for the size of the target of the therapy. For example, it may be sufficiently large to accommodate an individual's head and/or neck and/or chest or parts thereof; it may be of sufficient size to accommodate an individual's limb or any part thereof.

The frame may be of a shape suitable for supporting the thermoplastic matrix composite material. The frame may be of a suitable shape for attaching to the fixed surface of the radiotherapy and/or diagnosis apparatus. As such, the frame may completely enclose the area of the thermoplastic matrix composite material. Alternatively, the frame may not surround the complete perimeter of the thermoplastic matrix composite material. Alternatively, the frame may surround the perimeter of the thermoplastic matrix composite material sufficiently to provide support to the said thermoplastic matrix composite material. Alternatively, the frame may surround the perimeter of the thermoplastic matrix composite material such that said perimeter substantially takes the shape of the frame after moulding. Alternatively, the frame may have elements which are in place during moulding, and which are removed during treatment; examples might include a rectangular frame wherein all four edges are present during moulding, and wherein one or more edges are removed during treatment. Edges may be removed during treatment so as to enable attachment to the treatment device, for example.

One embodiment of the present invention is a method for obtaining a permanent joint between a thermoset matrix composite material and a thermoplastic matrix composite material comprising the steps of:
a) providing one or more holes in the thermoset matrix composite material along the position of the intended joint,
b) positioning thermoplastic matrix composite material on one side, and thermoplastic matrix composite material the other side of the thermoset matrix composite material along the position of the intended joint, and
c) applying a force to allow part of said thermoplastic matrix composite materials to pass through said holes located along said joint, and
d) obtaining a permanent joint between the thermoset matrix composite material and the themoplastic matrix composite materials.

Another embodiment of the present invention is a method as defined above, wherein the step c) comprises the use of a vacuum.

Another embodiment of the present invention is a method as defined above, wherein step c) comprises the use of pressure.

Another embodiment of the present invention is a method as defined above, wherein step c) comprises the use of heat.

Another embodiment of the present invention is a method as defined above, wherein said heat provides a temperature equal to or greater than the melting point of the thermoplastic resin.

Another embodiment of the present invention is a method as defined above wherein thermoplastic matrix composite material comprises a softener.

Another embodiment of the present invention is a method as defined above, where the softener is a CAPA® polycaprolactones.

Another embodiment of the present invention is a method as defined above, wherein uncured thermoset matrix composite material and/or uncured thermoset matrix composite material are used and the application of force in step c) also cures said matrix(ces).

Another embodiment of the present invention is a compound composite material made according to the method as defined above.

Another embodiment of the present invention is a structure comprising a thermoset matrix composite material and a thermoplastic matrix composite material joined according to the method as defined above, wherein part or all of the thermoplastic matrix composite material can be remoulded.

Another embodiment of the present invention is a method as defined above that is an item of footware wherein:
- the sole comprises said thermoset matrix composite material, and
- the upper, or part thereof comprises said thermoplastic matrix composite material.

Another embodiment of the present invention is a structure as defined above wherein:
- said part of upper is the heel and/or toe piece and/or instep.

Another embodiment of the present invention is a structure as defined above that is a radiotherapy mask for orienting a part of an individual relative to a treatment and/or diagnosis apparatus, and/or for shielding said individual from radiation, wherein:
- said thermoset matrix composite material is formed as a frame,
- thermoplastic matrix composite material is formed as an area held within said frame, and which is moulded according to the part of the individual.

Another embodiment of the present invention is a structure as defined above, wherein said frame is used to align the radiotherapy mask with the treatment and/or diagnosis apparatus.

Another embodiment of the present invention is a method for combining a thermoset matrix composite material with a thermoplastic matrix composite material, where both materials are sewn or stitched together by a flexible thread.

Another embodiment of the present invention is a method as defined above wherein said thermoset matrix composite material is any stiff material suitable for use in the manufacture of shoe soles.

Another embodiment of the present invention is a structure as defined above, manufactured using the method as defined above, and wherein said thermoset matrix composite material is any stiff material suitable for use in the manufacture of shoe soles.

### FIGURES

Figure 1: a cross-section of an intended according to the invention.

Figure 2: a cross-section of a joint according to the invention.

Figure 3: an plan view of a joint according to the invention and

Figure 4: a perspective view of a structure formed from a compound composite material according to the invention.

### EXAMPLES

The examples illustrate one or more embodiments of the invention and are not intended in any way to limit the scope of the invention.

### Example 1. Example of a joint according to the invention

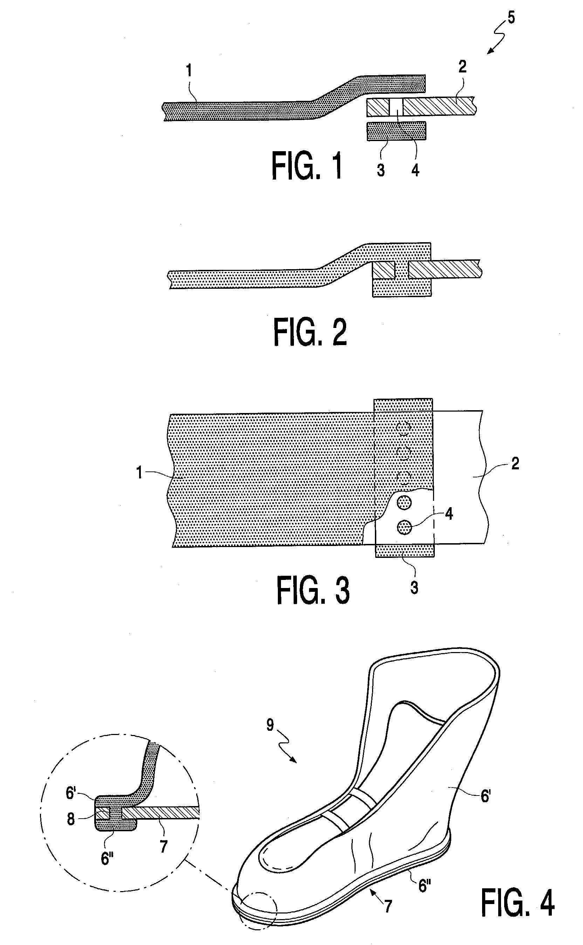

Fig. 1 illustrates a side view of a compound composite material [5] according to the invention prior to joining, comprising two thermoplastic matrix composite materials [1] and [3], and a thermoset matrix composite material [2] there-between, wherein one or more holes or hollows [4] are provided in the thermoset matrix composite material [2]. Fig. 3 illustrates a plan view of a compound composite material according to Fig. 1. Joining occurs by increasing the temperature, pressure or creating a vacuum and/or a combination of these techniques, causing the resin present in the thermoplastic matrix composite material [1] and [3] to flow through the hole [4] and join the thermoplast matrix composite materials [1] and [3] across the hole. The results of the joining process is illustrated in Fig 2.

### Example 2. Example of a structure according to the invention

An example of a structure according to the invention which comprises a compound composite material is an inner shoe [9]. The inner shoe has a sole [7] comprising one or more holes [8] along its periphery. Said holes [8] are sandwiched by two thermoplastic matrix composite materials [6'] and [6"] after joining. The strip [6"] forms a connecting edge along the contour of the sole. The upper part of the shoe [6'] may be remoulded after manufacture of the shoe. Tests have shown that this connection remains permanent after several remoldings and after a considerable amount of wear and tear.

## Claims

1. Method for obtaining a permanent joint between a thermoset matrix composite material and a thermoplastic matrix composite material comprising the steps of:
a) providing one or more holes in the thermoset matrix composite material along the position of the intended joint,
b) positioning thermoplastic matrix composite material on one side, and thermoplastic matrix composite material the other side of the thermoset matrix composite material along the position of the intended joint, and
c) applying a force to allow part of said thermoplastic matrix composite materials to pass through said holes located along said joint, and
d) obtaining a permanent joint between the thermoset matrix composite material and the themoplastic matrix composite materials.

2. Method according to claim 1, wherein the step c) comprises the use of a vacuum.

3. Method according to claim 1, wherein step c) comprises the use of pressure.

4. Method according to any of claims 1 to 3, wherein step c) comprises the use of heat.

5. Method according to any of claims 1 to 4, wherein said heat provides a temperature equal to or greater than the melting point of the thermoplastic resin.

6. Method according to any of claims 1 to 5 wherein thermoplastic matrix composite material comprises a softener.

7. Method according to claim 6, where the softener is a CAPA® polycaprolactones.

8. Method according to claim any of claims 1 to 7, wherein uncured thermoset matrix composite material and/or uncured thermoset matrix composite material are used and the application of force in step c) also cures said matrix(ces).

9. Compound composite material made according to the method of any of claims 1 to 8.

10. A structure comprising a thermoset matrix composite material and a thermoplastic matrix composite material joined according to the method according to any of claims 1 to 8, wherein part or all of the thermoplastic matrix composite material can be remoulded.

11. A structure according to claim 10 that is an item of footware wherein:
- the sole comprises said thermoset matrix composite material, and
- the upper, or part thereof comprises said thermoplastic matrix composite material.

12. A structure according to claim 10 wherein:
- said part of upper is the heel and/or toe piece and/or instep.

13. A structure according to claim 10 that is a radiotherapy mask for orienting a part of an individual relative to a treatment and/or diagnosis apparatus, and/or for shielding said individual from radiation, wherein:
- said thermoset matrix composite material is formed as a frame,
- thermoplastic matrix composite material is formed as an area held within said frame, and which is moulded according to the part of the individual.

14. A structure according to claim 13, wherein said frame is used to align the radiotherapy mask with the treatment and/or diagnosis apparatus.

15. Method for combining a thermoset matrix composite material with a thermoplastic matrix composite material, where both materials are sewn or stitched together by a flexible thread.

16. Method according to any of claims 1 to 8 wherein said thermoset matrix composite material is any stiff material suitable for use in the manufacture of shoe soles.

17. A structure according to claims 11 and 12, manufactured using the method of claim 16, and wherein said thermoset matrix composite material is any stiff material suitable for use in the manufacture of shoe soles.
